# EUROPEAN PATENT APPLICATION

(11) **EP 3 686 525 A1**
(43) Date of publication of application: **29.07.2020**
(21) Application number: 20153217.3
(22) Date of filing: 22.01.2020
(51) Int. Cl.: F25D 17/06, F25D 19/00, B60H 1/00, B60H 1/32, F25D 11/00, F28F 9/02, F28F 1/00

(54) **SELF-VENTING REFRIGERANT COIL**

(30) Priority: 25.01.2019 US 201962797052 P
(71) Applicant: Carrier Corporation, Palm Beach Gardens, FL 33418 (US)
(72) Inventor: SENF Jr., Raymond L, East Syracuse, NY 13057 (US)
(74) Representative: Dehns

(57) **Abstract**

A heat exchanger 38 includes a plurality of tube elements 62 including a first tube segment and a second tube segment and at least one return bend 64 connecting an end of the first tube segment to the second tube segment such that the plurality of tube elements 62 and the at least one return bend 64 define a fluid flow path of the heat exchanger. The at least one return bend is positioned within a cavity 72 isolated from a remainder of the heat exchanger.

## Description

The following description relates to evaporators and, more specifically, to a capping device for an evaporator coil for certain refrigerants, such as A2L refrigerants.

Regulations in various regions around the world are requiring that refrigerant suppliers reduce distributions of high global warming potential (GWP) refrigerants. This may present an issue, however, in that some new blends of low GWP refrigerants, such as A2L refrigerants, are often characterized as being mildly flammable. Thus, if an A2L refrigerant, for example, leaks into a cargo container interior through evaporator tubing, the leaked A2L refrigerant can create risk.

While the potential ignition of leaked, mildly flammable refrigerant can be addressed by various options, such as the provision of safety systems, doing so is costly and time consuming.

According to a first aspect, the invention provides a heat exchanger comprising a plurality of tube elements including a first tube segment and a second tube segment and at least one return bend connecting an end of the first tube segment to the second tube segment such that the plurality of tube elements and the at least one return bend define a fluid flow path of the heat exchanger. The at least one return bend is positioned within a cavity isolated from a remainder of the heat exchanger.

Optionally, an interface between the at least one return bend and the plurality of tube elements is arranged within the cavity.

Optionally, the heat exchanger further comprises a tube sheet connected to at least one of the plurality of tube elements and a sealing element positioned adjacent the tube sheet, wherein the sealing element and the tube sheet at least partially define the cavity.

Optionally, the sealing element is formed from sheet metal.

Optionally, the sealing element is oriented generally parallel to the tube sheet.

Optionally, the heat exchanger comprises a ventilation system for venting fluid leaked from the heat exchanger into the cavity to an ambient atmosphere.

Optionally, the ventilation system further comprises: a conduit in fluid communication with the cavity and a valve connected to the conduit, wherein the valve is operable to allow a flow there through in a first direction.

Optionally, the valve restricts a flow through the conduit in a second direction.

Optionally, the valve is a pressure relief valve.

According to another aspect, the invention provides a transport refrigeration system including a condenser, an evaporator coil, and a fan for moving air across the evaporator coil. At least a portion of the evaporator coil is positioned within a cavity isolated from a remainder of the evaporator coil. The evaporator coil may be provided by a heat exchanger as discussed above.

Optionally, the evaporator coil comprises a plurality of tube elements including a first tube segment and a second tube segment, at least one return bend connecting an end of the first tube segment to the second tube segment such that the plurality of tube elements and the at least one return bend define a fluid flow path of the heat exchanger.

Optionally, an interface between the at least one return bend and the plurality of tube elements is arranged within the cavity.

Optionally, the evaporator coil is a part of a heat exchanger that further comprises a tube sheet connected to at least one of the plurality of tube elements and a sealing element positioned adjacent the tube sheet, wherein the sealing element and the tube sheet at least partially define the cavity.

Optionally, the transport refrigeration system further comprises a fan and nozzle unit, and the fan and nozzle unit cooperates with the tube sheet and the sealing element to define the cavity.

Optionally, the system comprises a ventilation system for venting fluid leaked from the evaporator coil into the cavity to an ambient atmosphere.

Optionally, the transport refrigeration system is part of a transport refrigeration trailer, and the fluid within the cavity is vented to an exterior of the transport refrigeration trailer.

Optionally, the ventilation system further comprises a conduit in fluid communication with the cavity and a valve connected to the conduit, wherein the valve is operable to allow a flow there through in a first direction.

Optionally, the valve restricts a flow through the conduit in a second direction.

Optionally, the valve is a pressure relief valve.

Certain embodiments will be described by way of example only and with reference to the drawings as listed below. The following descriptions should not be considered limiting in any way. With reference to the accompanying drawings, like elements are numbered alike:
FIG. 1 is a side view of a transport refrigeration trailer;
FIG. 2 is a cross-sectional view of a transport refrigeration system;
FIG. 3 is a perspective view of a transport refrigeration system from within an interior cargo area of a transport refrigeration trailer;
FIG. 4 is a partially expanded view of a evaporator section of a transport refrigeration system;
FIG. 5 is a top view of an evaporator coil of the transport refrigeration system; and
FIG. 6 is a side view of an evaporator coil of the transport refrigeration system.

A detailed description of one or more embodiments of the disclosed apparatus and method are presented herein by way of exemplification and not limitation with reference to the Figures.

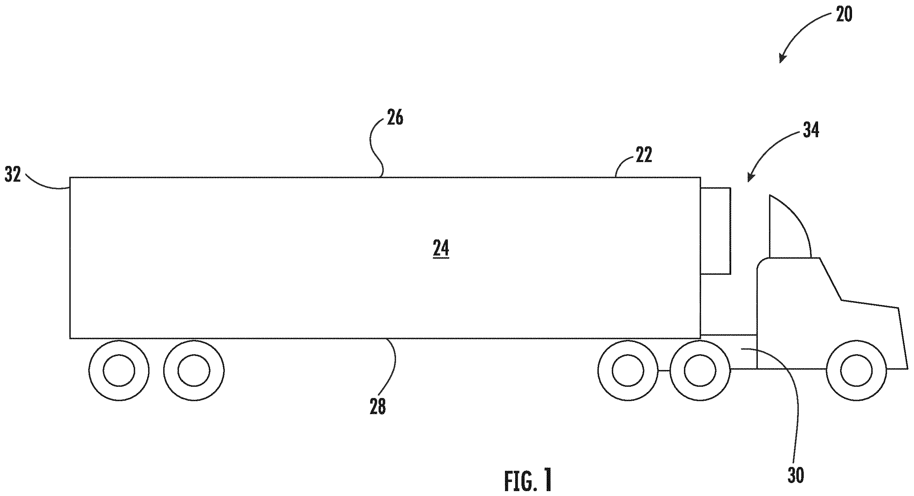

With reference now to FIGS. 1, a transport refrigeration trailer 20 for transportation of various good is illustrated. The trailer 20 has a trailer body 22 including an internal "cargo area" 24 formed by thermally insulated walls including a top wall 26, bottom wall 28, front wall 30, rear wall 32, as well as side walls (not shown). To the extent that goods within the cargo area 24 need to be kept in an air conditioned environment, such as where the goods are perishable food items for example, the trailer 20 includes a refrigeration system 34. In the illustrated embodiment, the refrigeration system 34 includes a transport refrigeration unit (TRU) attached to a portion of the trailer body 22, such as the front wall 30. The TRU is operable to draw heated air in from the cargo area 24, to cool the heated air, and to exhaust the cooled air back into the cargo area 24.

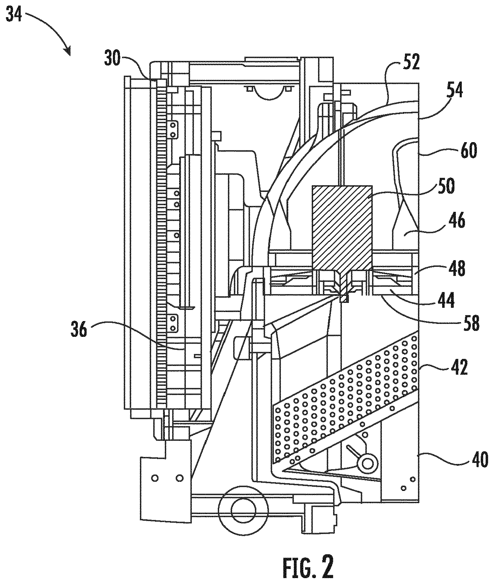

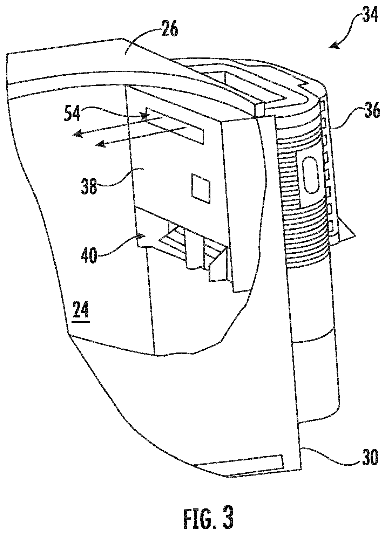

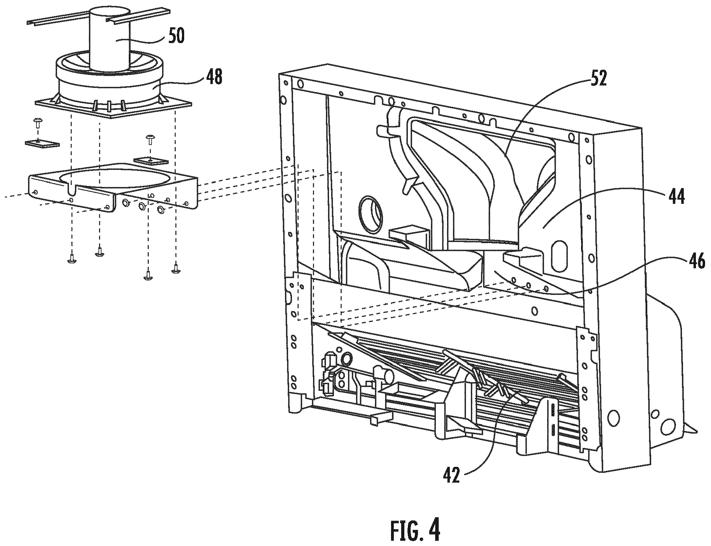

As best shown in FIG. 2, the TRU 34 includes an exterior condenser 36 that projects forward of the front wall 30 and an interior evaporator section 38 disposed within the front wall 30 and that projects rearwardly toward the cargo area 24 of the trailer 20. With reference now to FIGS. 3 and 4, an example of an evaporator section 38 of the TRU 34 is illustrated in more detail. The evaporator section 38 includes an inlet 40 that receives return air from the cargo area 24 of the trailer body 22. Mounted within a lower portion of the evaporator section 38 is an evaporator coil 42. The evaporator coil 42 may be mounted at an angle, as shown, to increase the effective surface area and assist in condensate drainage. However, embodiments where the evaporator coil 42 is mounted with a different configuration are also within the scope of the disclosure.

Mounted on a support deck of the evaporator section 38 is a fan and nozzle unit 44 having one or more interior regions. Disposed within an interior region 46 adjacent the bottom of the fan and nozzle unit 44 is an axial flow fan 48 and an electric drive motor 50 positioned vertically above the fan 48. The axes of the fan 48 and the drive motor 50 are vertically oriented. The nozzle 52 of the fan and nozzle unit 44 extends from adjacent the fan 48 to an outlet 54. In the illustrated, non-limiting embodiment, a first end 58 of the nozzle 56, is generally rounded so as to surround the fan 48. Moving from the first end 58 to the second end 60, the nozzle 56 decreases in cross-sectional area and gradually transitions from the circular shape to a wide aspect ratio rectangular cross-section, while also turning approximately 90 degrees to a rearwardly facing outlet 54. During operation, the return air from the cargo area 24 of the trailer 20 is drawn into the inlet 40, passed through the evaporator coil 42 where the air is cooled, and is then blown out of the outlet 54 toward the rear of the cargo area 24, to cool the cargo. It should be understood that the TRU 34 illustrated and described herein is intended as an example only. Accordingly, other transport refrigeration units having an inlet 40 for receiving air from the cargo area 24 of the trailer body 22 and an outlet 54 for discharging cool air into the cargo area 24 of the trailer body 22 are also within the scope of the disclosure.

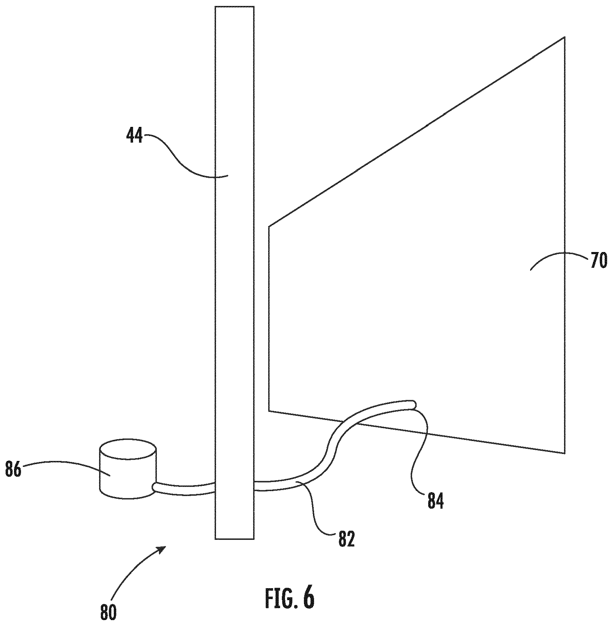

As best shown in FIG. 4, the lower portion of the evaporator section 38 has sufficient room to accommodate an entirety of the evaporator coil 42, including the evaporator tubing 62 and the return bend elements 64. The evaporator coil 42 may include one or more refrigerant conveying coiled tubes or one or more tube banks formed of a plurality of refrigerant conveying tubes extending across flow path from the inlet 40. The evaporator tubing 62 is generally provided as substantially straight tubes that run across a substantial length of the evaporator coil 42. The return bend elements 64, best shown in FIG. 6, include return bends that connect corresponding ends of two or more evaporator tubes 62 to one another and braze joints by which the return bends actually connect to the corresponding ends of the two or more evaporator tubes 62 as well as additional piping and valves. In addition, one or more tube sheets 66 are mounted along the straight tubes 62 to provide structural support to the evaporator coil 42.

While several different types of refrigerant can be used within the TRU 34, some refrigerants tend to have relatively high GWP whereas others tend to have relatively low GWP and, as regulations change, the use of the relatively low GWP refrigerants is becoming increasingly required. Relatively low GWP refrigerants tend to be more flammable than the relatively high GWP refrigerants. Therefore, where the relatively low GWP refrigerants are used in TRU applications, it is typically necessary to prevent leakage of the relatively low GWP refrigerants into the flows moving through the TRU 34 and/or into the cargo area 24.

Refrigerant leaks from the evaporator tubing 62 are uncommon, but in some embodiments, refrigerant leaks at the return bend elements 64 may occur. Thus, since the interior of the evaporator section 38 accommodates the return bend elements 64, leaks can occur and result in refrigerant (i.e., mildly flammable, low GWP refrigerants) entering into the flow of air through the TRU 34 or into the cargo area 24 directly.

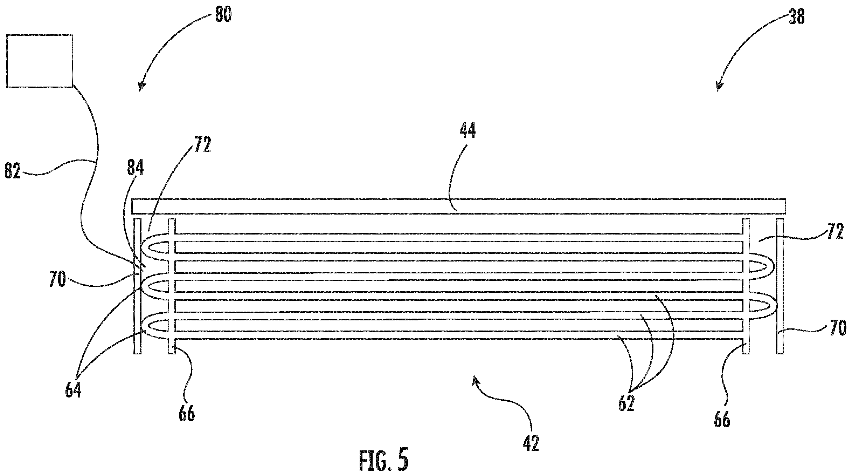

To prevent entrainment of the refrigerant within the airflow circulating through the TRU 34, or the flow of refrigerant into the cargo area 24 directly, the return bend elements 64 of the evaporator coil 42 are isolated from the remainder of the evaporator section 38. With reference now to FIGS. 5 and 6, a sealing element 70 is positioned within the evaporator section 38 of the TRU 34, adjacent the tube sheet 66 and the return bend elements 64. Together, the sealing element 70 and the tube sheet 66 cooperate with a surface defining the evaporator section 38, such as one or more adjacent surfaces of the fan and nozzle unit 44 for example, to define a sealed cavity 72 within which the plurality of return bend elements 64 arranged at a side of the evaporator coil 42 are located. The sealing element 70 may be formed from any suitable material, such as sheet metal for example. Although the sealing element 70 is illustrated as being oriented generally parallel to the adjacent tube sheet 66 such that the width of the cavity 72, measured parallel to the axis of the evaporator tubes 62, is generally uniform, embodiments where the sealing element 70 is arranged at an angle to the tube sheet 66 are also within the scope of the disclosure. Further, although the sealing element 70 and cavity 72 are illustrated and described with respect to an evaporator coil 42 of a TRU 34, it should be understood that the return bend elements of any heat exchanger in any application having a low GWP refrigerant circulating there through is considered within the scope of the disclosure.

In an embodiment, a ventilation system 80 is arranged in fluid communication with the cavity 72 and is operable to exhaust leaked refrigerant, such as refrigerant gas for example, therefrom. As shown, the ventilation system 80 includes a conduit or vent line 82 extending through a corresponding opening 84 formed in the sealing mechanism. A valve 86, such as a check valve or other one way valve for example, may be positioned along the fluid flow path defined by the conduit 82. The valve 86 is operable to allow refrigerant from within the cavity 72 to pass there through and vent to the ambient atmosphere, such as external to the trailer body 22 for example. However, the valve 86 a flow restricts of moisture and ambient air through the conduit 82 into the cavity 72.

In an embodiment, the valve 86 is a pressure relief valve operable in response to application of a known pressure. In such embodiments, the accumulation of refrigerant within the cavity 72 will increase the pressure within this encapsulated space. Once the pressure within the cavity 72 exceeds a threshold associated with the valve 86, the valve 86 will operate to allow a flow of refrigerant to vent outside the trailer body 22. Once enough refrigerant has been expelled that the pressure within the cavity 72 and/or the conduit 82 falls below the threshold of the valve 86, the valve 86 will close.

A heat exchanger having the return bend elements 64 isolated from a remainder of a refrigeration system provides a method not only to contain leaked refrigerant, but also to safely vent refrigerant from the cavity 72 to the ambient atmosphere, lowering the risk of refrigerant build up. Further, by using a simple sealing element 70 to form the cavity 72, existing refrigeration systems may be easily modified isolate areas susceptible to leaks.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention, as defined by the claims. In addition, many modifications may be made to adapt a particular situation or material to the teachings of the present disclosure. Therefore, it is intended that the present invention not be limited to the particular embodiment disclosed as the best mode contemplated for carrying out this present invention, but that the present invention will include all embodiments falling within the scope of the claims.

## Claims

1. A heat exchanger comprising:
a plurality of tube elements including a first tube segment and a second tube segment;
at least one return bend connecting an end of the first tube segment to the second tube segment such that the plurality of tube elements and the at least one return bend define a fluid flow path of the heat exchanger, wherein the at least one return bend is positioned within a cavity, the cavity being isolated from a remainder of the heat exchanger.

2. The heat exchanger of claim 1, wherein an interface between the at least one return bend and the plurality of tube elements is arranged within the cavity.

3. The heat exchanger of claim 1 or 2, wherein the heat exchanger further comprises:
a tube sheet connected to at least one of the plurality of tube elements; and
a sealing element positioned adjacent the tube sheet, wherein the sealing element and the tube sheet at least partially define the cavity.

4. The heat exchanger of claim 3, wherein the sealing element is formed from sheet metal.

5. The heat exchanger of claim 3 or 4, wherein the sealing element is oriented generally parallel to the tube sheet.

6. The heat exchanger of any preceding claim, comprising a ventilation system for venting fluid leaked from the heat exchanger into the cavity to an ambient atmosphere.

7. The heat exchanger of claim 6, wherein the ventilation system further comprises:
a conduit in fluid communication with the cavity; and
a valve connected to the conduit, wherein the valve is operable to allow a flow there through in a first direction.

8. The heat exchanger of claim 7, wherein the valve restricts a flow through the conduit in a second direction.

9. The heat exchanger of claim 7 or 8, wherein the valve is a pressure relief valve.

10. A transport refrigeration system comprising:
a condenser;
an evaporator coil, which may be provided by the heat exchanger of any preceding claim, at least a portion of the evaporator coil being positioned within a cavity isolated from a remainder of the evaporator coil; and
a fan for moving air across the evaporator coil.

11. The transport refrigeration system of claim 10, wherein said evaporator coil further comprises:
a plurality of tube elements including a first tube segment and a second tube segment;
at least one return bend connecting an end of the first tube segment to the second tube segment such that the plurality of tube elements and the at least one return bend define a fluid flow path of the heat exchanger.

12. The transport refrigeration system of claim 11, wherein an interface between the at least one return bend and the plurality of tube elements is arranged within the cavity.

13. The transport refrigeration system of claim 11, wherein the heat exchanger further comprises:
a tube sheet connected to at least one of the plurality of tube elements; and
a sealing element positioned adjacent the tube sheet, wherein the sealing element and the tube sheet at least partially define the cavity.

14. The transport refrigeration system of claim 13, wherein the transport refrigeration system further comprises a fan and nozzle unit, and the fan and nozzle unit cooperates with the tube sheet and the sealing element to define the cavity.

15. The transport refrigeration system of any of claims 10 to 14, further comprising a ventilation system for venting fluid leaked from the evaporator coil into the cavity to an ambient atmosphere, preferably wherein the transport refrigeration system is part of a transport refrigeration trailer, and the fluid within the cavity is vented to an exterior of the transport refrigeration trailer.
